# FASCICULE DE BREVET EUROPEEN

(11) **EP 3 729 171 B1**
(45) Date de publication et mention de la délivrance du brevet: **11.03.2026**
(21) Numéro de dépôt: 18836466.5
(22) Date de dépôt: 19.12.2018
(51) Int. Cl.: G02B 27/01

(54) **SYSTÈME DE PROJECTION D'IMAGES, DISPOSITIF D'AFFICHAGE TÊTE-HAUTE COMPORTANT UN TEL SYSTÈME ET MÉTHODE DE CONCEPTION OPTIQUE ASSOCIÉE**
BILDPROJEKTIONSSYSTEM, HEADUP-ANZEIGEVORRICHTUNG MIT EINEM SOLCHEN SYSTEM UND ZUGEHÖRIGES OPTISCHES ENTWURFSVERFAHREN
IMAGE PROJECTION SYSTEM, HEAD-UP DISPLAY DEVICE COMPRISING SUCH A SYSTEM AND ASSOCIATED OPTICAL DESIGN METHOD

(30) Priorité: 20.12.2017 FR 1762679
(43) Date de publication de la demande: 28.10.2020
(73) Titulaire: Valeo Comfort and Driving Assistance, 94000 Créteil (FR)
(72) Inventeur: LE MOUNIER, Florian, 94046 Créteil CEDEX (FR); MERMILLOD, Pierre, 94046 Créteil CEDEX (FR); HUSSON, Arnaud, 94046 Créteil CEDEX (FR)
(74) Mandataire: Delplanque, Arnaud
(86) Numéro de dépôt international: PCT/EP2018/085922
(87) Numéro de publication internationale: WO 2019/121969

(56) Documents cités:
- WO-A1-2017/191055
- FR-A- 1 592 576
- JP-A- 2004 268 638
- JP-A- 2010 282 108
- JP-A- 2015 082 019
- US-A- 5 703 605

## Description

### DOMAINE TECHNIQUE AUQUEL SE RAPPORTE L'INVENTION

La présente invention concerne de manière générale le domaine des systèmes d'aide à la conduite pour véhicules.

Elle concerne plus particulièrement un système de projection d'images pour un dispositif d'affichage tête-haute.

Elle concerne également un dispositif d'affichage tête-haute comportant un tel système de projection d'images, ainsi qu'une méthode de conception optique d'un tel dispositif.

Elle concerne enfin un véhicule automobile équipé d'un tel dispositif d'affichage tête-haute.

### ARRIERE-PLAN TECHNOLOGIQUE

Pour faciliter et rendre plus sûre la conduite d'un véhicule, on souhaite éviter que le conducteur ne soit forcé de détourner son regard de la route qu'il emprunte.

Il est alors connu d'utiliser un dispositif d'affichage tête-haute adapté à projeter des informations (vitesse du véhicule, direction à suivre, indicateurs d'alerte, etc.) à la hauteur du regard du conducteur afin de l'aider dans sa conduite. À cette fin, un système de projection de ces informations est mis en œuvre au sein du système d'affichage tête-haute.

Généralement, ce système de projection d'images pour dispositif d'affichage tête-haute comporte une unité de génération d'images, par exemple un écran à cristaux liquides du type « TFT-LCD » (pour « *Thin-Film Transistors Liquid Crystal Display »* en anglais) et un miroir de repliement.

De manière connue, le miroir de repliement est disposé de manière à réfléchir, en direction d'une lame partiellement réfléchissante du dispositif d'affichage tête-haute, un faisceau lumineux émis depuis une surface d'affichage sensiblement plane (*i.e.* la surface de l'écran LCD) de l'unité de génération d'images. Ce faisceau lumineux est associé à une scène lumineuse (image ou film numérique) qui est affichée sur la surface d'affichage.

Le système de projection comporte également un boîtier, par exemple un boîtier mécanique de protection, qui loge, au moins partiellement, l'unité de génération d'images et le miroir de repliement, et qui présente, sur une face de sortie, une ouverture ou fenêtre de sortie adaptée (dans une position ouverte lorsque cette fenêtre de sortie peut être fermée) à laisser sortir hors du boîtier le faisceau lumineux réfléchi par le miroir de repliement.

Généralement, l'unité de génération d'images est dimensionnée pour que le faisceau lumineux émis depuis la surface d'affichage soit d'intensité suffisante pour que les images projetées au conducteur par le dispositif d'affichage tête-haute soient aisément visibles en conditions de jour, par exemple sous forte illumination solaire.

En conséquence, la partie intérieure du boîtier du système de projection d'images qui loge l'unité de génération d'images est alors « remplie » d'une lumière intense qui a tendance à être diffusée par des éléments situés à l'intérieur du boîtier puis, malgré certaines solutions connues (par ex. : revêtement de l'intérieur du boîtier avec une peinture noire, de préférence d'aspect mat), à sortir finalement par la fenêtre de sortie en direction de la lame partiellement réfléchissante.

Dans ces conditions, à l'image voulue de la scène lumineuse qui est formée par le dispositif d'affichage tête-haute, en particulier par réflexion sur la lame partiellement transparente (lame légèrement concave), se superposent des images, plus ou moins nettes, des bords périphériques de la surface d'affichage ou du miroir de repliement, ces images venant donc perturber la vision de l'image de la scène lumineuse par le conducteur.

À cause des aberrations optiques introduites principalement par la lame du dispositif d'affichage tête-haute, ces images des bords périphériques apparaissent donc distordues au conducteur, de sorte que l'image de la scène lumineuse elle-même apparaît distordue, alors qu'un traitement électronique de la scène lumineuse affichée par l'unité de génération d'images (on parle de « *pré-warping* » ou de scène lumineuse « *pré-warpée* ») permet de réduire fortement la distorsion de cette image générée par le dispositif d'affichage tête-haute.

### OBJET DE L'INVENTION

Afin de remédier à l'inconvénient précité de l'état de la technique, la présente invention propose un système de projection d'images permettant de réduire la distorsion apparente dans l'image de la scène lumineuse projetée par le système de projection d'images au travers du dispositif d'affichage tête-haute.

Plus particulièrement, on propose selon l'invention un système de projection d'images pour un dispositif d'affichage tête-haute tel que défini en introduction, dans lequel :
- ledit boîtier comprend :
- un deuxième élément mécanique de masquage masquant au moins partiellement ledit miroir de repliement et présentant une deuxième ouverture ayant un deuxième bord de masquage courant le long d'un bord périphérique dudit miroir de repliement ; et
- ledit deuxième bord de masquage présente une forme prédéterminée de sorte que son image par le dispositif d'affichage tête-haute présente une forme sensiblement rectangulaire.

Ainsi, grâce à une telle conception du boîtier, il est possible grâce aux éléments de masquage d'atténuer visiblement la diffusion sur les bords périphériques de la surface d'affichage et du miroir de repliement.

Le système peut en outre comprendre un premier élément mécanique de masquage masquant au moins partiellement ladite unité de génération d'images et présentant une première ouverture ayant un premier bord de masquage courant le long d'un bord périphérique de ladite surface d'affichage.

De plus, comme l'image du deuxième bord de masquage (miroir de repliement) a une forme sensiblement rectangulaire, l'image (préalablement « *pré-warpée* ») projetée de la scène lumineuse n'apparaît plus en comparaison distordue au conducteur et celui-ci n'éprouve pas de problème de visibilité ou d'interprétation de cette image.

D'autres caractéristiques non limitatives et avantageuses du système de projection d'images conforme à l'invention sont les suivantes :
- la forme dudit premier bord de masquage ou dudit deuxième bord de masquage est prédéterminée de manière à minimiser la distorsion optique de son image par le dispositif d'affichage tête-haute ;
- la fenêtre de sortie dudit boîtier présente un bord de sortie ayant également une forme prédéterminée de sorte que son image par ladite lame présente une forme sensiblement rectangulaire ;
- ladite première ouverture présente des dimensions réduites adaptées pour masquer une zone non utilisée de ladite surface d'affichage ;
- ladite deuxième ouverture présente des dimensions réduites adaptées pour masquer une zone non utilisée dudit miroir de repliement.

L'invention propose également un dispositif d'affichage tête-haute comportant un système de projection d'images tel que précité et adapté à projeter un faisceau lumineux, et une lame partiellement réfléchissante adaptée à former une image à partir dudit faisceau lumineux projeté.

L'invention concerne par ailleurs une méthode de conception optique d'un dispositif d'affichage tête-haute conforme à l'invention, comprenant les étapes suivantes :
a) déterminer une position et une orientation de ladite lame par rapport au système de projection d'images pour former une image de la scène lumineuse affichée par l'unité de génération d'images à une distance moyenne de projection et selon un angle moyen de projection prédéterminés ;
b) ladite unité de génération d'images, ledit miroir de repliement et ladite lame étant agencés l'un par rapport à l'autre, déterminer un cône optique formé par l'ensemble des rayons lumineux propagés, par retour inverse de la lumière au travers du dispositif d'affichage tête-haute, à partir d'une zone oculaire initiale moyenne prédéterminée jusqu'à la surface d'affichage de l'unité de génération d'images ;
c) déterminer le premier bord de masquage, respectivement le deuxième bord de masquage, en fonction d'une intersection dudit cône optique avec ladite surface d'affichage, respectivement avec ledit miroir de repliement.

Dans un mode de réalisation particulièrement avantageux, ladite intersection du cône optique avec la surface d'affichage, respectivement avec le miroir de repliement, formant une première courbe fermée, respectivement une deuxième courbe fermée, ledit premier bord de masquage, respectivement ledit deuxième bord de masquage, est plus grande et homothétique de ladite première courbe, respectivement de ladite deuxième courbe, l'écart entre ladite courbe et ledit bord étant égal à une valeur minimale d'écart prédéterminée.

De préférence, ladite valeur minimale d'écart prédéterminée est inférieure à 5 millimètres, par exemple comprise entre 1 mm et 5 mm.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue d'ensemble en coupe partielle d'un véhicule automobile comportant un dispositif d'affichage tête-haute conforme à l'invention ;
- la figure 2 est une vue de côté d'un système de projection d'images selon un mode de réalisation de l'invention ;
- la figure 3 montre des éléments mécaniques de masquage disposés sur le trajet du faisceau lumineux entre un écran et un miroir de repliement dans le système de projection de la figure 2 ;
- la figure 4 est une vue de dessus du système de projection de la figure 2 ;
- les figures 5 et 6 sont des captures d'écran effectuées avec un logiciel de simulation optique montrant comment le dispositif d'affichage tête-haute de la figure 1 peut être conçu ;
- la figure 7 illustre l'interception d'un cône optique avec le miroir de repliement dans le cadre de la définition d'un bord de masquage de l'un des éléments mécaniques ;
- la figure 8 est une vue schématique d'une unité de génération d'images montrant une zone masquée de la surface d'affichage ;
- la figure 9 est un exemple d'image de scène lumineuse incidente sur la lame du dispositif d'affichage tête-haute de la figure 1 ; et
- la figure 10 est un exemple d'image de scène lumineuse vue au travers du dispositif d'affichage tête-haute de la figure 1.

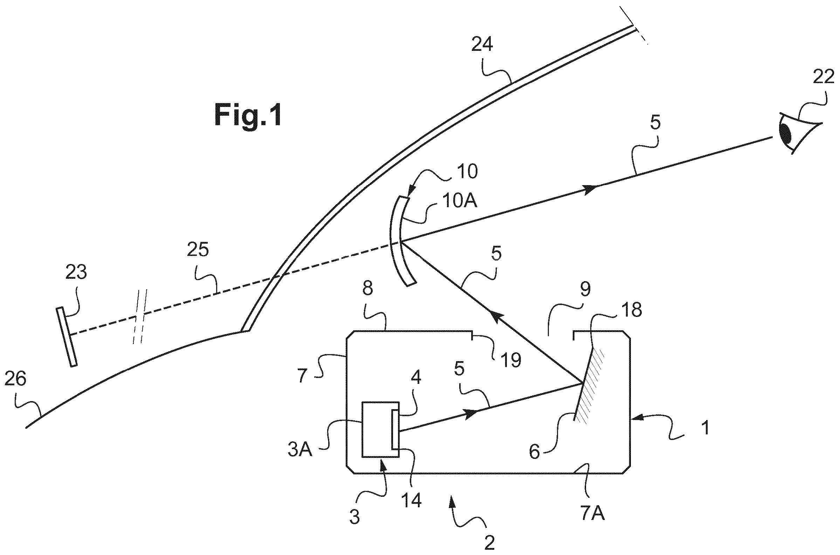

Sur la figure 1, on a représenté dispositif d'affichage tête-haute 2, ci-après dénommé « *afficheur tête-haute* » ou plus simplement afficheur, équipant un véhicule, ici un véhicule automobile (non référencé).

De manière générale, cet afficheur 2 est destiné à projeter des images dans le champ de vision d'un individu 22 situé à l'intérieur du véhicule (on a représenté sur la figure 1 que l'un des yeux de l'individu 22). On considérera dans la suite de la description que cet individu 22 est le conducteur du véhicule automobile.

Ces images peuvent comprendre par exemple des informations relatives au véhicule (vitesse, régime moteur, niveau d'essence, distance par rapport aux autres véhicules, etc...) ou encore des instructions quant à l'itinéraire à suivre par le véhicule (en association avec un système de navigation embarquée par exemple).

Pour projeter ces images, l'afficheur 2 comporte, d'une part, un système de projection d'images 1 et, d'autre part, une lame 10 partiellement réfléchissante (ou partiellement transparente), appelée communément « *combineur* »*.*

Le système de projection d'images 1 projette un faisceau lumineux 5 qui est ici réfléchi par la lame 10 pour former une image (virtuelle) 23 à partir du faisceau lumineux 5 projeté.

Dans le mode de réalisation particulier illustré sur la figure 1, la lame 10 est disposée entre le pare-brise 24 du véhicule et les yeux du conducteur 22 et comprend une face avant 10A tournée vers l'intérieur de l'habitacle du véhicule, c'est-à-dire vers le conducteur 22. Cette face avant 10A est de préférence partiellement réfléchissante, par exemple avec un coefficient moyen de réflexion compris entre 20 % et 40 %, de manière à réfléchir le faisceau lumineux 5 en direction du conducteur 22 et à former l'image 23 pour qu'elle soit visible par le conducteur 22.

Le système de projection d'images 1 comporte, quant à lui, une unité de génération d'images 3, un miroir de repliement 6 et un boîtier 7 logeant l'unité de génération d'images 3 et le miroir de repliement 6.

L'unité de génération d'images 3 comprend de préférence un écran 4 lumineux actif, qui est ici monté dans un corps 3A formant support pour l'écran 4.

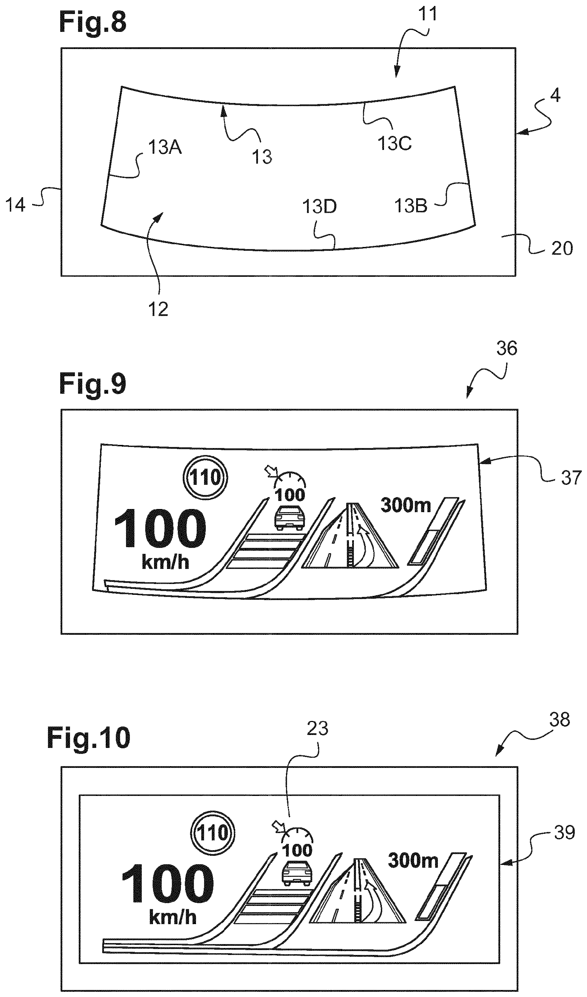

L'écran 4 est ici un écran à cristaux liquides (écran dit « LCD » selon l'acronyme anglais de « *Liquid Crystal Display* ») à transistors en couche mince (ou « TFT » pour « *Thin-Film Transistors* »)*.* Il forme une surface d'affichage, généralement sensiblement plane, de l'unité de génération d'images 3 sur laquelle est affichée une scène lumineuse (voir par exemple l'image 36 de la figure 9), cette scène lumineuse correspondant à l'émission du faisceau lumineux 5.

Le corps 3A contient une unité de commande (non représentée) de l'écran 4 qui reçoit des signaux en provenance de l'ordinateur de bord du véhicule et qui pilote en conséquence l'écran 4 pour afficher une scène lumineuse sur celui-ci.

En d'autres termes, lorsque l'écran 4 est piloté par l'unité de commande, l'unité de génération d'images 3 génère un faisceau lumineux 5 (seul un rayon lumineux primaire partant du centre de l'écran 4 est représenté sur la figure 1) représentant cette scène à projeter dans le champ de vision du conducteur 22.

Comme représenté schématiquement sur la figure 1, le miroir de repliement 6 du système de projection d'images 1 est ici un miroir plan mais, en variante, ce miroir de repliement peut être un miroir sphérique, ou bien un miroir de forme parabolique, elliptique ou asphérique. Le miroir de repliement 6 est disposé par rapport à l'unité de génération d'images 3 de manière à réfléchir le faisceau lumineux 5 émis par l'unité de génération d'images 3. En pratique, le miroir de repliement est généralement placé près de l'unité 3, légèrement plus haut (par rapport à un plancher du véhicule automobile), et dans une position légèrement inclinée (par rapport à l'horizontale formée par le plancher du véhicule).

Le boîtier 7 présente ici une forme extérieure (délimitée par les parois extérieures du boîtier) grossièrement parallélépipédique avec une face supérieure 8 globalement plane et ayant une ouverture, ou fenêtre de sortie 9, pouvant prendre soit une position fermée (non représentée), soit une position ouverte (cas de la figure 1).

Dans sa position fermée, la fenêtre de sortie 9 est bouchée par un couvercle supérieur opaque empêchant le faisceau lumineux 5 de sortir (si l'unité 4 en émet un).

Ce couvercle supérieur est mobile pour libérer la fenêtre de sortie 9 en position ouverte, de sorte que le faisceau lumineux 5, réfléchi par le miroir de repliement 6, peut alors sortir hors du boîtier 7 en direction de la lame 10 partiellement réfléchissante du dispositif d'affichage tête-haute 2.

De manière avantageuse, l'unité de génération d'images 3, et plus précisément l'écran 4, le miroir de repliement 6 et la lame 10 sont agencés les uns par rapport aux autres pour que l'afficheur 2 projette l'image 23 de la scène lumineuse dans le champ de vision du conducteur 22 mais à l'extérieur du véhicule, ici au niveau de l'avant du capot 24 de ce véhicule.

Cette image 23 de la scène est formée à une première distance-image du conducteur 22 qui est généralement comprise entre 1,5 et 3,5 mètres.

Plus précisément, l'image 23 de la scène projetée par le système optique de projection dans une direction privilégiée 25 (voir tirets sur la figure 1) dans laquelle le conducteur 22 voit une partie centrale de cette image 23. Cette direction privilégiée 25 associée à la partie centrale de l'image 23 de la scène lumineuse peut être par exemple définie par la direction de regard du conducteur 3 lorsque celui-ci regarde le point-image correspondant à l'image du centre de l'écran 4 par le miroir de repliement 6 et la lame 10 de l'afficheur 2.

Comme la lame 10 est partiellement transparente, l'image 23 de la scène lumineuse est visible par le conducteur 22 à une distance et dans une direction adéquates sans que celui-ci n'ait à accommoder ou bien à détourner de manière trop importante le regard de la route lorsqu'il est en situation de conduite.

Pour que l'image 23 de la scène lumineuse puisse être visible aux yeux du conducteur 22 quelles que soient les conditions d'illumination environnantes, en particulier en conditions de fort ensoleillement, l'écran 4 de l'unité de génération d'images 3 doit être sélectionné de sorte qu'il présente une luminance visuelle (exprimée en candelas par mètre-carré ou cd/m²) supérieure à un seuil de luminance lorsque l'unité 3 est à pleine puissance. Ce seuil est généralement égal à 3000 cd/m², mieux égal à 5000 cd/m², et encore mieux au moins égal à 10000 cd/m²,

Pour des raisons de coût et aussi de poids, le boîtier 7 du système de projection d'images 1 est généralement de conception optique assez sommaire, l'écran 4 étant souvent placé en simple regard direct du miroir de repliement 6. Le boîtier 7 n'est donc pas spécialement conçu pour traiter les problèmes de diffusion de la lumière, ni même de lumière parasite (« *stray light* »)*.*

En conséquence, il s'avère que toute l'énergie lumineuse du faisceau lumineux 5 émis par l'écran 4 n'est pas utilisée pour la formation de l'image 23 de la scène lumineuse. En effet, une partie de cette énergie est diffusée ou réfléchie par les différents éléments se trouvant à l'intérieur du boîtier 7, comme par exemple le miroir de repliement 6, la paroi intérieure 7A du boîtier 7, ou l'écran 4 lui-même (après une première diffusion ou réflexion). Les bords 19 de la fenêtre de sortie 9 contribuent également à diffuser la lumière sortante en direction de la lame 10 de l'afficheur 2.

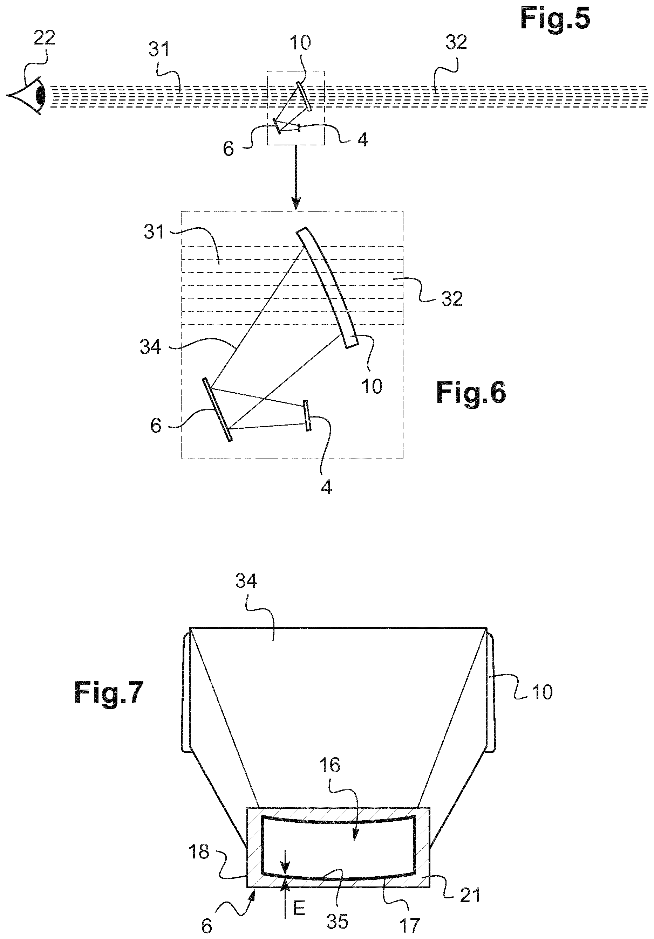

Il résulte de cette diffusion de la lumière émise par l'écran 4 que les bords (qui diffusent beaucoup en comparaison des autres surfaces) des différents éléments, et surtout de l'écran 4 et du miroir de repliement 6, sont très « lumineux ». On entend en fait par là qu'à l'image 23 principale (celle de la scène lumineuse affichée sur l'écran 4), se superposent des images parasites, en particulier les images du bord périphérique 14 de l'écran 4 (représenté sur les figures 1 et 8) et du bord périphérique 18 du miroir de repliement 6 (représenté sur les figures 1 et 7).

Sans précautions particulières, ces images parasites présentent des contours non seulement flous mais surtout déformés, dans la mesure où l'afficheur 2 est entaché de distorsion optique.

La distorsion optique dans l'afficheur 2 entraîne que l'image d'une mire quadrillée sur l'écran 4 ayant des lignes verticales et horizontales n'est pas une mire régulière par imagerie au travers de l'afficheur 2. Non seulement les lignes deviennent courbes, mais aussi elles ne sont plus perpendiculaires.

En théorie, la distorsion optique d'un système optique complexe peut être corrigée pour un plan objet et un plan image donnés.

Toutefois, en pratique ici, où le système optique est très simple (en autres pour des raisons de coût et d'encombrement) avec un miroir de repliement 6 plan ou légèrement incurvé et une lame ayant un rayon de courbure très élevé (la lame est plus plane que courbe), il est très difficile de supprimer complètement la distorsion optique de sorte qu'une distorsion résiduelle apparaît dans l'image 23 de la scène lumineuse affichée par l'écran 4.

Afin de s'affranchir malgré tout de l'effet de cette distorsion optique résiduelle, il est connu de la compenser en déformant - de manière opposée - la scène lumineuse affichée sur l'écran 4. En pratique, connaissant (par calcul optique) quelle est la distorsion optique résiduelle pour la conjugaison écran 4-image 23 (cette conjugaison étant essentiellement fixée par l'agencement et la forme du miroir 6 et de la lame 10), il est possible de déterminer comment déformer la scène lumineuse affichée sur l'écran 4 pour que celle-ci apparaissent comme non déformée dans le plan de l'image 23 (voir fig. 1) du centre de l'écran 4.

S'il est aisé de déformer « électroniquement » les contours de la scène lumineuse affichée sur l'écran 4 du système de projection d'images 1 pour que leurs images paraissent non déformées (contours rectilignes), il en est tout autre des bords périphériques 14, 18 susmentionnés de l'unité de génération d'images 3 et du miroir de repliement 6 qui sont des bords « physiques » difficilement déformables.

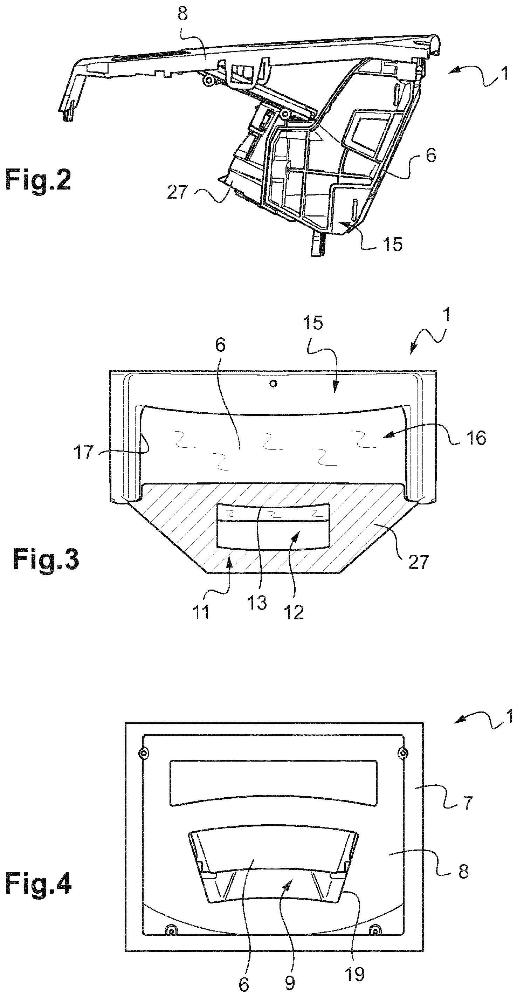

Ainsi, afin de limiter la visibilité des bords 14, 18 de l'écran 4 et du miroir de repliement 6 et afin de masquer l'effet de la distorsion sur les images de ces bords 14, 18, selon l'invention :
- le boîtier 7 comprend ici (sur le trajet du faisceau lumineux entre l'écran 4 et le miroir de repliement 6) :
- de manière optionnelle un premier élément 11 mécanique de masquage (visible en figure 3) masquant au moins partiellement l'unité de génération d'images 3 (c'est-à-dire situé en partie au droit de l'unité de génération d'image 3 selon la direction du faisceau lumineux) et présentant une première ouverture 12 ayant un premier bord 13 de masquage courant le long d'un bord périphérique 14 de la surface d'affichage 4 ; et
- selon l'invention un deuxième élément 15 mécanique de masquage (voir notamment en figure 3) masquant au moins partiellement le miroir de repliement 6 (c'est-à-dire situé en partie au droit du miroir de repliement 6 selon la direction du faisceau lumineux) et présentant une deuxième ouverture 16 ayant un deuxième bord 17 de masquage courant le long d'un bord périphérique 18 du miroir de repliement 6 ; et
- le premier bord 13 de masquage et le deuxième bord 17 de masquage présentent chacun une forme prédéterminée de sorte que son image par le dispositif d'affichage tête-haute 2 présente une forme sensiblement rectangulaire.

De manière avantageuse, les formes du premier bord 13 de masquage et du deuxième bord 17 de masquage sont ici prédéterminées de sorte que leurs images par le dispositif d'affichage tête-haute 2 (lame 10 et miroir 6) apparaissent non déformées, c'est-à-dire sans distorsion apparente (la distorsion optique est toujours là mais elle est artificiellement « compensée » grâce aux formes du premier et deuxième bord 13, 17).

Des exemples particuliers d'éléments 11, 15 de masquage sont représentés sur les figures 2 à 4.

Le premier élément 11 de masquage est ici attaché de manière démontable (par ex. : par clipsage) à une pièce de support 27 (voir fig. 2) de l'unité de génération d'images 4 (non visible sur ces figures) qui s'articule (voir fig. 2) d'un côté avec le capot 8 du boîtier 7.

Le deuxième élément de masquage 15 forme ici une partie latérale du boîtier 7 (comme visible en figure 2) comportant deux rainures rectilignes pour l'insertion de deux bords latéraux du miroir de repliement 6 plan.

Comme le montre bien la figure 4, la fenêtre de sortie 9 du boîtier 7 du système de projection d'images 1 présente également un bord de sortie 19 ayant également une forme prédéterminée de sorte que son image par la lame 10, dans le plan de l'image 23 de la scène lumineuse affichée sur l'écran 4, présente une forme sensiblement rectangulaire.

On a représenté sur les figures 8 à 10 un exemple d'images obtenues avec le système de projection d'images de l'invention.

Sur la figure 8, on a représenté la surface d'affichage 4 de l'unité de génération d'images, qui est ici de forme rectangulaire au format 4:3.

L'élément de masquage 11 est ici tel que la première ouverture 12 présente des dimensions réduites adaptées pour masquer une zone non utilisée 20 de la surface d'affichage 4 de l'unité de génération d'images 3.

Son premier bord 13 de masquage présente ici une forme sensiblement trapézoïdale avec deux bords rectilignes 13A, 13B et deux bords incurvés 13C, 13D joignant les deux bords rectilignes 13A, 13B.

On a représenté sur la figure 9, l'image intermédiaire 36 de la scène lumineuse affichée sur l'écran 4, cette image intermédiaire 36 étant formée dans le plan de la lame 10 de l'afficheur 2. On remarque que cette image intermédiaire 36 présente des contours 37 déformés, *i.e.* non rectilignes, de la même manière que le premier bord 13 de l'élément de masquage 11.

Puis, par réflexion sur la lame 10, se forme (voir figure 10) l'image finale 38 de la scène lumineuse, dans le plan de l'image 23 du centre de l'écran 4. Cette image finale 38 présente alors une image 23 non déformée et un contour 39 de forme rectangulaire et non distordue (le premier bord de masquage 13 étant déformé par le système optique de manière à retrouver une forme rectangulaire comme prévu du fait de sa forme particulière).

On va maintenant décrire, en référence aux figures 5 à 7, la méthode de conception optique utilisée pour déterminer quelles formes donner aux bords de masquage 13, 17 des éléments de masquage 11, 15 de l'afficheur 2.

Selon l'invention, la méthode de conception optique comprend une première étape (étape a) lors de laquelle on détermine la position et l'orientation de la lame 10 partiellement réfléchissante par rapport au système de projection d'images 1 pour former une image 23 de la scène lumineuse affichée sur l'écran 4 de l'unité de génération d'images 3 à une distance moyenne de projection et selon un angle moyen de projection prédéterminés (direction moyenne 25, voir fig. 1).

Cette première étape a) est donc une étape qui permet, en fonction des dimensions respectives de l'écran 4 et des dimensions souhaitées de l'image 23 dans la direction moyenne 25 pour l'individu 22, d'agencer (position et orientation) les différents éléments optiques, écran 4, miroir de repliement 6 et lame 10 les uns par rapport aux autres pour avoir une image 23 nette à une certaine distance de l'œil du conducteur 22.

Alors, dans une deuxième étape (étape b, voir figs. 5 et 6), on détermine un cône optique 31 formé par l'ensemble des rayons lumineux propagés, par retour inverse de la lumière au travers de l'afficheur 1, à partir d'une zone oculaire 30 initiale moyenne prédéterminée jusqu'à l'écran 4 de l'unité de génération d'images 3.

Cette zone oculaire 30 initiale moyenne est prédéterminée pour correspondre en pratique à la région des yeux du conducteur (couramment dénommée au moyen de l'appellation anglaise « *eyebox* »), qui est une zone de l'espace au travers de laquelle passent tous les rayons lumineux issus de l'écran 4. En d'autres termes, pour que le conducteur 22 puisse visualiser l'image virtuelle 23 formée par l'afficheur 2 (voir cône optique 32 de la figure 5), l'un de ses yeux 22 doit être situé au niveau de cette zone oculaire 30, qui est atteinte, après réflexion sur la lame 10, par le faisceau lumineux issu de l'écran 4.

On supposera ici que la zone oculaire 30 initiale moyenne correspond à celle d'un utilisateur moyen, de taille moyenne et ayant une orientation de tête moyenne donnée.

On a représenté sur la figure 6 une vue de détail du cône optique 34 après réflexion sur la lame 10 partiellement réfléchissante, et après réflexion sur le miroir de repliement 6 du système de projection d'images 1 vers l'écran 4 de l'unité de génération d'images 3.

Dans une troisième étape (étape c) de la méthode de conception, on détermine le premier bord 11 de masquage, respectivement le deuxième bord 15 de masquage, en fonction de l'intersection du cône optique 34 avec l'écran 4, respectivement avec le miroir de repliement 6.

On a ainsi représenté sur la figure 7 le cône optique 34 après réflexion sur la lame 10 de l'afficheur 2 ainsi que l'intersection 35 entre le cône optique 34 et le miroir de repliement 6.

On remarque que cette intersection 35 forme une deuxième courbe fermée sur le miroir de repliement 6 ayant une forme similaire au premier bord 13 de masquage de la figure 8. L'intersection du cône optique 34 avec l'écran 4 de l'unité 3 forme quant à elle une première courbe fermée sur l'écran 4.

Avantageusement, afin d'éviter que les rayons lumineux du faisceau lumineux 5, émis par l'unité de génération d'images 3 et correspondant à la scène lumineuse affichée sur l'écran 4 ne diffusent sur les bords de masquage 13, 17 de la chambre optique, on choisit le premier bord 13 de masquage, respectivement le deuxième bord 17 de masquage, comme est plus grand et homothétique de la première courbe, respectivement de la deuxième courbe 35, l'écart, noté E (voir figure 7) entre la courbe et le bord étant égal à une valeur minimale d'écart prédéterminée.

En d'autres termes, pour réaliser cela, on élargit lors de la simulation optique, le cône optique 34 des rayons lumineux issus de la zone oculaire pour qu'il soit plus « large » d'une valeur E.

La valeur E minimale d'écart prédéterminée dépend des tolérances mécaniques dans l'agencement de l'afficheur tête-haute 2 dans le véhicule, et cette valeur minimale augmente au fil de la propagation du cône optique. Cette valeur E est typiquement inférieure à 5 mm.

Dans l'exemple représenté sur la figure 7, l'écart est tel que E = 4 mm.

Ainsi, sur la figure 7, on a représenté le miroir de repliement 6 avec son bord périphérique 18 ainsi que la deuxième ouverture 16 définie par le deuxième bord 17 de masquage du deuxième élément mécanique de masquage 15 et présentant des dimensions réduites masquant une zone non utilisée 21 du miroir de repliement 6. En effet, le deuxième bord 17 de masquage est légèrement plus grand que la courbe fermée 35 définie par l'intersection du cône optique 34 avec le plan du miroir de repliement 6.

La présente invention n'est nullement limitée au mode de réalisation décrit et représenté, mais l'homme du métier saura y apporter toute variante conforme à son esprit.

On pourrait ainsi utiliser à la place du miroir de repliement un système optique plus complexe comprenant plusieurs miroirs et/ou d'autres éléments optiques.

On pourrait également prévoir que le pare-brise du véhicule fasse office de lame partiellement réfléchissante. Dans ce cas, les deux feuilles de verre formant ledit pare-brise peuvent être avantageusement feuilletées avec un intercalaire de feuilletage de forme prismatique ou en coin (« *wedge* » en anglais). Ceci permet d'éviter le phénomène parasite de « double image » résultant de la réflexion des faisceaux lumineux sur les deux feuilles de verre en direction du conducteur.

## Revendications

1. Système de projection d'images (1) pour un dispositif d'affichage tête-haute (2) comportant :
- une unité de génération d'images (3) émettant, depuis une surface d'affichage (4) plane, un faisceau lumineux (5) associé à une scène lumineuse affichée sur ladite surface d'affichage (4) ;
- un miroir de repliement (6) disposé de manière à réfléchir le faisceau lumineux (5) émis par ladite unité de génération d'images (3) ; et
- un boîtier (7) logeant au moins partiellement ladite unité de génération d'images (3) et ledit miroir de repliement (6), et présentant, sur une face de sortie (8), une fenêtre de sortie (9) adaptée à laisser sortir hors dudit boîtier ledit faisceau lumineux (5) réfléchi par ledit miroir de repliement (6) en direction d'une lame (10) partiellement réfléchissante dudit dispositif d'affichage tête-haute (2) ;
ledit système de projection d'images (1) étant **caractérisé en ce que** :
- ledit boîtier (7) comprend :
- un deuxième élément (15) mécanique de masquage masquant au moins partiellement ledit miroir de repliement (6) et présentant une deuxième ouverture (16) ayant un deuxième bord (17) de masquage courant le long d'un bord périphérique (18) dudit miroir de repliement (6) ; et
- ledit deuxième bord (17) de masquage présentant une forme prédéterminée de sorte que son image par le dispositif d'affichage tête-haute (2) présente une forme sensiblement rectangulaire.

2. Système de projection d'images selon la revendication 1, dans lequel
- ledit boîtier (7) comprend :
- un premier élément (11) mécanique de masquage masquant au moins partiellement ladite unité de génération d'images (3) et présentant une première ouverture (12) ayant un premier bord (13) de masquage courant le long d'un bord périphérique (14) de ladite surface d'affichage (4),
- ledit premier bord (13) de masquage de masquage présentant une forme prédéterminée de sorte que son image par le dispositif d'affichage tête-haute (2) présente une forme sensiblement rectangulaire.

3. Système de projection d'images selon la revendication 1 ou 2, dans lequel la forme dudit premier bord (13) de masquage ou dudit deuxième bord (17) de masquage est prédéterminée de manière à minimiser la distorsion optique de son image par le dispositif d'affichage tête-haute (2).

4. Système de projection d'images (1) selon l'une des revendications précédentes, dans lequel la fenêtre de sortie (9) dudit boîtier (7) présente un bord de sortie (19) ayant également une forme prédéterminée de sorte que son image par ladite lame (10) présente une forme sensiblement rectangulaire.

5. Système de projection d'images (1) selon l'une des revendications 2 à 4,
dans lequel ladite première ouverture (12) présente des dimensions réduites adaptées pour masquer une zone non utilisée (20) de ladite surface d'affichage (4).

6. Système de projection d'images (1) selon l'une des revendications 1 à 5, dans lequel ladite deuxième ouverture (16) présente des dimensions réduites adaptées pour masquer une zone non utilisée (21) dudit miroir de repliement (6).

7. Dispositif d'affichage tête-haute (2) comportant :
- un système de projection d'images (1) selon l'une des revendications 1 à 5 adapté à projeter un faisceau lumineux (5) ; et
- une lame (10) partiellement réfléchissante adaptée à former une image (23) à partir dudit faisceau lumineux (5) projeté.

8. Méthode de conception optique d'un dispositif d'affichage tête-haute (1) selon la revendication 7 comprenant les étapes suivantes :
a) déterminer une position et une orientation de ladite lame (10) par rapport au système de projection d'images pour former une image (23) de la scène lumineuse affichée par l'unité de génération d'images (3) à une distance moyenne de projection et selon un angle moyen de projection prédéterminés ;
b) ladite unité de génération d'images (3), ledit miroir de repliement (6) et ladite lame (10) étant agencés l'un par rapport à l'autre, déterminer un cône optique formé par l'ensemble des rayons lumineux propagés, par retour inverse de la lumière au travers du dispositif d'affichage tête-haute, à partir d'une zone oculaire initiale moyenne prédéterminée jusqu'à la surface d'affichage de l'unité de génération d'images ;
c) déterminer le premier bord de masquage, respectivement le deuxième bord de masquage, en fonction d'une intersection dudit cône optique avec ladite surface d'affichage, respectivement avec ledit miroir de repliement.

9. Méthode de conception optique selon la revendication 8, selon laquelle, ladite intersection du cône optique avec la surface d'affichage, respectivement avec le miroir de repliement, formant une première courbe fermée, respectivement une deuxième courbe fermée, ledit premier bord de masquage, respectivement ledit deuxième bord de masquage, est plus grande et homothétique de ladite première courbe, respectivement de ladite deuxième courbe, l'écart (E) entre ladite courbe et ledit bord étant égal à une valeur minimale d'écart prédéterminée.

10. Méthode de conception optique selon la revendication 9, selon laquelle ladite valeur minimale d'écart prédéterminée est inférieure à 5 millimètres.

## Patentansprüche

1. Bildprojektionssystem (1) für eine Head-up-Anzeige (2) mit:
- eine Bilderzeugungseinheit (3), die von einer ebenen Anzeigefläche (4) aus einen Lichtstrahl (5) aussendet, der einer auf der Anzeigefläche (4) angezeigten Lichtszene zugeordnet ist;
- einen Umlenkspiegel (6), der so angeordnet ist, dass er den von der Bilderzeugungseinheit (3) ausgesendeten Lichtstrahl (5) reflektiert; und
- ein Gehäuse (7), das die Bildgenerierungseinheit (3) und den Umlenkspiegel (6) zumindest teilweise aufnimmt und an einer Austrittsseite (8) ein ein Ausgangsfenster (9) aufweist, das so ausgelegt ist, dass es den von dem Umlenkspiegel (6) reflektierten Lichtstrahl (5) aus dem Gehäuse in Richtung einer teilweise reflektierenden Scheibe (10) der Head-up-Anzeige (2) austreten lässt; wobei das Bildprojektionssystem (1) **dadurch gekennzeichnet ist, dass**:
- das Gehäuse (7) umfasst:
- ein zweites mechanisches Abdeckelement (15), das den Umlenkspiegel (6) zumindest teilweise abdeckt und eine zweite Öffnung (16) mit einem zweiten Abdeckrand (17) aufweist, der entlang eines Umfangsrandes (18) des Umlenkspiegels (6) verläuft; und
- wobei der zweite Abdeckrand (17) eine vorbestimmte Form aufweist, sodass sein Bild durch die Head-up-Anzeige (2) eine im Wesentlichen rechteckige Form aufweist.

2. Bildprojektionssystem nach Anspruch 1, wobei - das Gehäuse (7) umfasst:
- ein erstes mechanisches Abdeckelement (11), das die Bildgenerierungseinheit (3) zumindest teilweise abdeckt und eine erste Öffnung (12) mit einem ersten Abdeckrand (13) aufweist, der entlang einer Umfangskante (14) der Anzeigefläche (4) verläuft,
- wobei der erste Abdeckungsrand (13) eine vorbestimmte Form ssofort aufweist, dass sein Bild durch die Head-up-Anzeige (2) eine im Wesentlichen rechteckige Form aufweist.

3. Bildprojektionssystem nach Anspruch 1 oder 2, wobei die Form der ersten Maskierungskante (13) oder der zweiten Maskierungskante (17) so vorgegeben ist, dass die optische Verzerrung ihres Bildes durch die Head-up-Anzeige (2) minimiert wird.

4. Bildprojektionssystem (1) nach einem der vorstehenden Ansprüche, wobei das Ausgangsfenster (9) des Gehäuses (7) einen Ausgangsrand (19) aufweist, der ebenfalls eine vorbestimmte Form hat, so dass sein Bild durch die Lamelle (10) eine im Wesentlichen rechteckige Form aufweist.

5. Bildprojektionssystem (1) nach einem der Ansprüche 2 bis 4, wobei die erste Öffnung (12) reduzierte Abmessungen aufweist, die dazu geeignet sind, einen ungenutzten Bereich (20) der Anzeigefläche (4) abzudecken.

6. Bildprojektionssystem (1) nach einem der Ansprüche 1 bis 5, wobei die zweite Öffnung (16) reduzierte Abmessungen aufweist, die dazu geeignet sind, einen ungenutzten Bereich (21) des Umlenkspiegels (6) abzudecken.

7. Head-up-Anzeigevorrichtung (2) mit:
- ein Bildprojektionssystem (1) gemäß einem der Ansprüche 1 bis 5, das zum Projizieren eines Lichtstrahls (5) geeignet ist; und
- eine teilweise reflektierende Lamelle (10), die dazu ausgelegt ist, aus dem projizierten Lichtstrahl (5) ein Bild (23) zu erzeugen.

8. Verfahren zum optischen Entwurf einer Head-up-Anzeige (1) gemäß Anspruch 7, das die folgenden Schritte umfasst:
a) Bestimmen einer Position und einer Ausrichtung der Lamelle (10) in Bezug auf das Bildprojektionssystem, um ein Bild (23) der von der Bilderzeugungseinheit (3) angezeigten Lichtszene in einem vorbestimmten mittleren Projektionsabstand und unter einem vorbestimmten mittleren Projektionswinkel zu erzeugen;
b) wobei die Bilderzeugungseinheit (3), der Umlenkspiegel (6) und die Klinge (10) relativ zueinander angeordnet sind, einen optischen Kegel bestimmen, der durch die Gesamtheit der Lichtstrahlen gebildet wird, die sich durch die Head-up-Anzeige von der Rück s Lichts von einem vorbestimmten mittleren Anfangsblickfeld bis zur Anzeigefläche der Bilderzeugungseinheit;
c) Bestimmen der ersten Maskierungskante bzw. der zweiten Maskierungskante in Abhängigkeit von einem Schnittpunkt des optischen Kegels mit der Anzeigefläche bzw. mit dem Umlenkspiegel.

9. Optisches Konstruktionsverfahren nach Anspruch 8, wobei der Schnittpunkt des optischen Kegels mit der Anzeigefläche bzw. mit dem Umlenkspiegel eine erste geschlossene Kurve bzw. eine zweite geschlossene Kurve bildet, wobei die erste Maskierungskante bzw. die zweite Maskierungskante größer und homothetisch zur ersten Kurve bzw. zur zweiten Kurve ist, wobei der Abstand (E) zwischen der Kurve und der Kante einem vorbestimmten Mindestabstand entspricht.

10. Optisches Konstruktionsverfahren nach Anspruch 9, wobei der vorbestimmte Mindestabstandswert weniger als 5 Millimeter beträgt.

## Claims

1. An image projection system (1) for a head-up display device (2) comprising:
- an image generation unit (3) emitting, from a flat display surface (4), a light beam (5) associated with a light scene displayed on said display surface (4);
- a folding mirror (6) arranged to reflect the light beam (5) emitted by said image generation unit (3); and
- a housing (7) at least partially accommodating said image generation unit (3) and said folding mirror (6), and having, on an exit face (8), an output window (9) adapted to allow said light beam (5) reflected by said folding mirror (6) to exit said housing in the direction of a partially reflective blade (10) of said head-up display device (2);
said image projection system (1) being **characterised in that**:
- said housing (7) comprises:
- a second mechanical masking element (15) at least partially masking said folding mirror (6) and having a second opening (16) with a second masking edge (17) running along a peripheral edge (18) of said folding mirror (6); and
- said second masking edge (17) having a predetermined shape such that its image by the head-up display device (2) has a substantially rectangular shape.

2. Image projection system according to claim 1, wherein - said housing (7) comprises:
- a first mechanical masking element (11) at least partially masking said image generation unit (3) and having a first opening (12) with a first masking edge (13) running along a peripheral edge (14) of said display surface (4),
- said first masking edge (13) having a predetermined shape so that its image by the head-up display device (2) has a substantially rectangular shape.

3. An image projection system according to claim 1 or 2, wherein the shape of said first masking edge (13) or said second masking edge (17) is predetermined so as to minimise optical distortion of its image by the head-up display device (2).

4. An image projection system (1) according to any one of the preceding claims, wherein the output window (9) of said housing (7) has an output edge (19) also having a predetermined shape so that its image by said blade (10) has a substantially rectangular shape.

5. Image projection system (1) according to one of claims 2 to 4, wherein said first opening (12) has reduced dimensions adapted to mask an unused area (20) of said display surface (4).

6. Image projection system (1) according to one of claims 1 to 5, wherein said second aperture (16) has reduced dimensions adapted to mask an unused area (21) of said folding mirror (6).

7. Head-up display device (2) comprising:
- an image projection system (1) according to one of claims 1 to 5 adapted to project a light beam (5); and
- a partially reflective blade (10) adapted to form an image (23) from said projected light beam (5).

8. Method for the optical design of a head-up display device (1) according to claim 7, comprising the following steps:
a) determining a position and orientation of said blade (10) relative to the image projection system to form an image (23) of the light scene displayed by the image generation unit (3) at a predetermined average projection distance and angle;
b) said image generation unit (3), said folding mirror (6) and said blade (10) being arranged relative to each other, determining an optical cone formed by all the propagated light rays, by reverse reflection of the light through the head-up display device, from a predetermined average initial ocular area to the display surface of the image generation unit;
c) determining the first masking edge and the second masking edge, respectively, based on an intersection of said optical cone with said display surface and said folding mirror, respectively.

9. Optical design method according to claim 8, wherein said intersection of the optical cone with the display surface and the folding mirror, respectively, forms a first closed curve and a second closed curve, respectively, said first masking edge and said second masking edge are larger than and homothetic to said first curve and said second curve, respectively, the distance (E) between said curve and said edge being equal to a predetermined minimum distance value.

10. Optical design method according to claim 9, wherein said predetermined minimum distance value is less than 5 millimetres.
